# EUROPÄISCHE PATENTANMELDUNG

(11) **EP 1 634 752 A2**
(43) Veröffentlichungstag der Anmeldung: **15.03.2006**
(21) Anmeldenummer: 05019392.9
(22) Anmeldetag: 07.09.2005
(51) Int. Cl.: B60J 7/185, B60J 7/12

(54) **Bewegbares Verdeck für ein Cabriolet-Fahrzeug**

(30) Priorität: 09.09.2004 DE 102004044033
(71) Anmelder: Wilhelm Karmann GmbH, 49084 Osnabrück (DE)
(72) Erfinder: Weiss, Lorenz, 49076 Osnabrück (DE); Schulz, Robert, 49090 Osnabrück (DE); Licher, Siegfried, 49124 Georgsmarienhütte (DE)

(57) **Zusammenfassung**

Bewegbares Fahrzeugverdeck für ein Cabriolet-Fahrzeug, das ein Verdeckgestell (12) umfaßt und durch Verlagerung desselben um quer zur Fahrzeuglängsachse gegenüberliegende Hauptschwenklager (14) heckseitig ablegbar bzw. von dort in eine Schließstellung rückführbar ist, dadurch gekennzeichnet, daß die Hauptschwenklager (14) jeweils aus einem ersten (14a) und einem zweiten (14b) Hauptschwenklagerteil bestehen, wobei das erste Hauptschwenklagerteil (14a) karosseriefest ist und das zweite Hauptschwenklagerteil (14b) am Verdeckgestell fest oder befestigt ist und das erste und das zweite Hauptschwenklager über eine Verschlußeinrichtung, vorzugsweise eine Schnellverschlußeinrichtung, miteinander lösbar verbindbar sind, und Cabriolet-Fahrzeug mit demselben.

## Beschreibung

Die vorliegende Erfindung betrifft ein bewegbares Fahrzeugverdeck für ein Cabriolet-Fahrzeug, das ein Verdeckgestell umfaßt und durch Verlagerung desselben um quer zur Fahrzeuglängsachse gegenüberliegende Hauptschwenklager heckseitig ablegbar bzw. von dort in eine Schließstellung rückführbar ist.

Ein Fahrzeugverdeck der eingangs genannten Art ist beispielsweise aus der DE 100 29 472 A1 bekannt. Bei dem bekannten Fahrzeugverdeck sind die Hauptschwenklager karosseriefest. Dies weist den Nachteil auf, daß das Fahrzeugverdeck weder vom Besitzer/Fahrer des Cabriolet-Fahrzeugs noch von einer Werkstatt herausnehmbar und nachfolgend zur Entfaltung seiner vollen Funktion ohne erneute Justage wieder einbaubar ist.

Der Erfindung liegt somit die Aufgabe zugrunde, das gattungsgemäße Fahrzeugverdeck derart weiterzubilden, daß es leicht ausbaubar und nachfolgend unter Beibehaltung seiner Funktion wieder leicht einbaubar ist.

Erfindungsgemäß wird diese Aufgabe bei dem gattungsgemäßen Fahrzeugverdeck dadurch gelöst, daß die Hauptschwenklager jeweils aus einem ersten und einem zweiten Hauptschwenklagerteil bestehen, wobei das erste Hauptschwenklagerteil karosseriefest ist und das zweite Hauptschwenklagerteil am Verdeckgestell fest oder befestigt ist und das erste und das zweite Hauptschwenklager über eine Verschlußeinrichtung, vorzugsweise eine Schnellverschlußeinrichtung, miteinander lösbar verbindbar sind.

Insbesondere kann dabei vorgesehen sein, daß das erste Hauptschwenklagerteil ein Unterteil des jeweiligen Hauptschwenklagers ist und das zweite Hauptschwenklagerteil ein Oberteil des jeweiligen Hauptschwenklagers ist.

Günstigerweise weist jedes Hauptschwenklager eine Zentriereinrichtung zur Zentrierung der jeweiligen ersten und zweiten Hauptschwenklagerteile relativ zueinander auf.

Gemäß einer besonderen Ausführungsform der Erfindung kann vorgesehen sein, daß es ein Softtop ist. Mit Softtop ist beispielsweise ein Faltverdeck gemeint.

Insbesondere kann vorgesehen sein, daß es aus Textil, Stoff, PVC oder Leder oder einer beliebigen Kombination derselben besteht.

Alternativ kann vorgesehen sein, daß es ein RHT (Retractable Hardtop (versenkbares Hardtop)) ist.

Insbesondere kann dabei vorgesehen sein, daß es aus Glas, Kunststoff oder Metall oder einer beliebigen Kombination derselben besteht.

Schließlich ist gemäß der Erfindung auch ein Cabriolet-Fahrzeug mit einem Faltverdeck nach einem der Ansprüche 1 bis 7 vorgesehen.

Der Erfindung liegt die überraschende Erkenntnis zugrunde, daß durch die zweiteilige Gestaltung der Hauptschwenklager und das Vorsehen einer Verschlußeinrichtung das Fahrzeugverdeck einfach ein- und ausbaubar bzw. lösbar ist. Dadurch bieten sich darüber hinaus die Möglichkeiten, ein Faltverdeck (aus Stoff) z. B. gegen ein festes Coupé-Dach beispielsweise für den Winterbetrieb auszutauschen, wobei der dann freiwerdende Bereich des Faltverdecks als zusätzlicher Stauraum genutzt werden kann, das Cabriolet-Fahrzeug ganz ohne Verdeck zu fahren (puristisches Design), die Farbe oder das Design des Faltverdecks zu ändern etc.

Bei Mittelmotorfahrzeugen wird darüber hinaus eine gute Zugänglichkeit bei Wartungs- und Reparaturarbeiten, insbesondere am Antriebsaggregat und damit ein geringerer Zeit- und Kostenaufwand erzielt, da bei offenen Mittelmotorfahrzeugen das Fahrzeugverdeck über dem Motor liegt. Derzeit muß das Antriebsaggregat bei Cabriolet-Fahrzeugen mit Mittelmotor und Fahrzeugverdeck schon bei kleineren Servicearbeiten nach unten ausgebaut bzw. von unten gewartet werden.

Weitere Merkmale und Vorteile der Erfindung ergeben sich aus den Ansprüchen und aus der nachstehenden Beschreibung, in der ein Ausführungsbeispiel anhand der schematischen Zeichnungen im einzelnen erläutert ist. Dabei zeigt:
- Figur 1: eine perspektivische Ansicht eine Fahrzeugverdecks gemäß einer besonderen Ausführungsform der Erfindung in Schließstellung auf einem lediglich in Form einer Karosseriestruktur angedeuteten Cabriolet-Fahrzeug;
- Figur 2a: eine perspektivische Ansicht des Fahrzeugverdecks von Figur 1 beim Herausnehmen;
- Figur 2b: eine Einzeldarstellung des in Figur 2a gezeigten Fahrzeugverdecks;
- Figur 2c: eine Einzeldarstellung der in Figur 2a gezeigten Karosseriestruktur; und
- Figur 3: ein Beispiel für eine Schnellverschlußeinrichtung zum Verbinden eines Hauptschwenklagerteils mit einem zweiten Hauptschwenklagerteil.

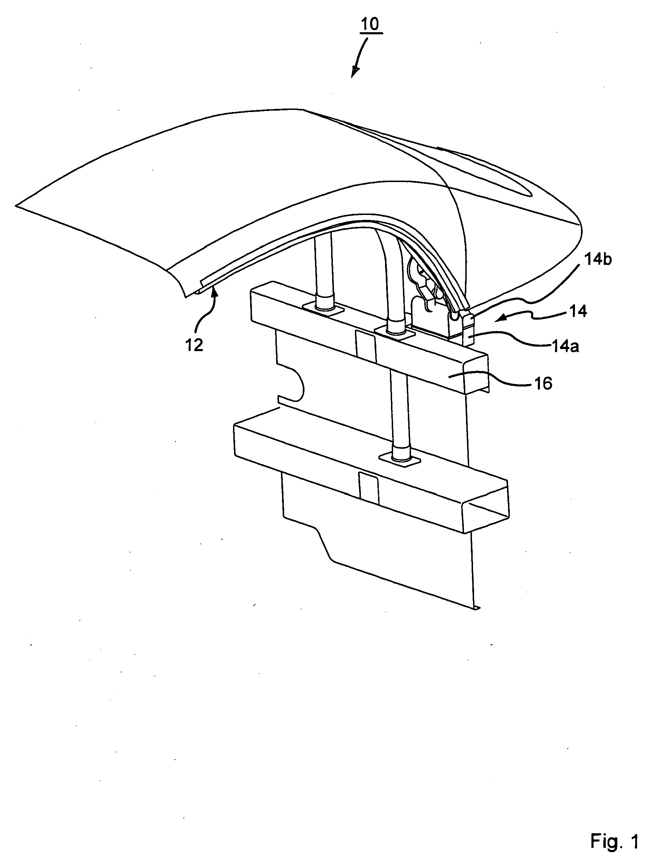

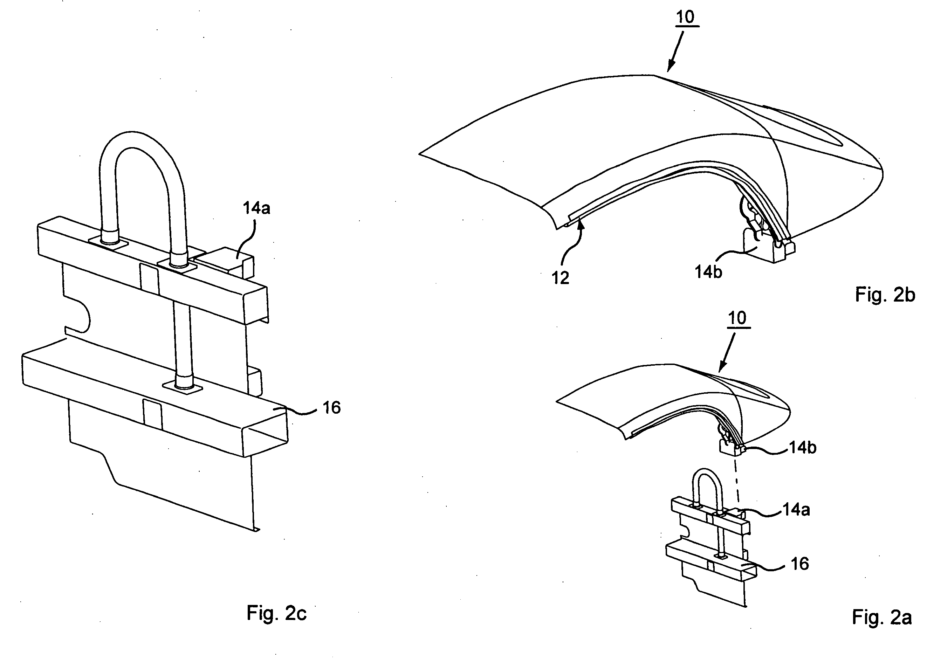

Das in Figur 1 lediglich schematisch gezeigte Fahrzeugverdeck 10 in Form eines Faltverdecks weist ein Verdeckgestell 12 auf, von dem nur ein Teil sichtbar ist. Das Verdeckgestell 12 ist durch Verlagerung um quer zur Fahrzeuglängsachse gegenüberliegende Hauptschwenklager, von denen nur eins sichtbar ist und mit dem Bezugszeichen 14 versehen ist, heckseitig (wobei sich in Figur 1 das Heck rechts befindet) ablegbar bzw. von dort in eine Schließstellung rückführbar. Das gezeigte Hauptschwenklager 14 weist ein Unterteil 14a und ein Oberteil 14b auf. Das Unterteil 14a ist karosseriefest, das heißt hinsichtlich seiner Lage relativ zur Karosseriestruktur 16 justiert. Dazu ist es an einer Karosseriestruktur 16 karosseriefest verschraubt. Das Oberteil 14b ist mit dem Verdeckgestell 12 einteilig ausgebildet. Wie in den Figuren 2a bis 2c gezeigt, bleibt somit das Oberteil 14b beim Herausnehmen des Fahrzeugverdecks 10 an selbigem, während das Unterteil 14a an der Karosseriestruktur 16 bleibt.

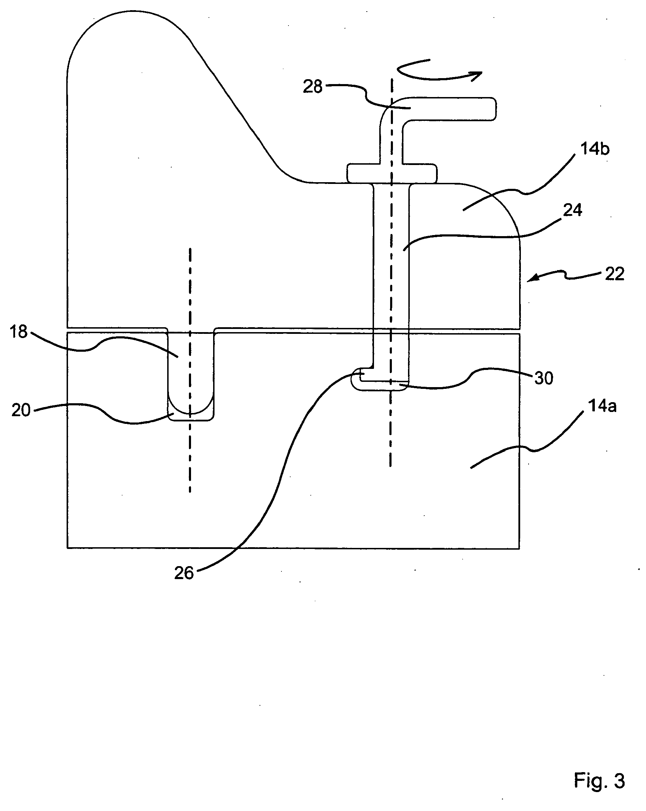

Zur genauen Anordnung des Fahrdeckverdecks 10 in der Karosserie eines Cabriolet-Fahrzeugs kann - wie in Figur 3 gezeigt - das Oberteil 14b einen Zentrierbolzen 18 und das Unterteil 14a eine korrespondierende Zentrierbohrung 20 aufweisen. Zur Anordnung des Fahrzeugverdecks 10 in einem Cabriolet-Fahrzeug bzw. zur Herausnahme aus selbigem weist das Hauptschwenklager 14 eine Schnellverschlußeinrichtung 22 auf, die gemäß der besonderen Ausführungsform in Figur 3 einen Bolzen 24 umfaßt, der an seinem unteren Ende einen seitlichen Ansatz 26 und an seinem oberen Ende einen Griff 28 aufweist. Der Bolzen 24 erstreckt sich durch eine Durchgangsbohrung im Oberteil 14b in eine Bohrung 30 im Unterteil 14b hinein. Besagte Bohrung 30 ist so ausgebildet, daß in Abhängigkeit von der Winkelposition des Bolzens 24 das Unterteil 14a und das Oberteil 14b verriegelt sind bzw. frei sind, so daß das Oberteil 14b vom Unterteil 14a abgehoben werden kann. Durch einfaches Drehen des Bolzens 24 mittels des Griffes 28 - wie durch den Pfeil angedeutet - kann somit das Fahrzeugverdeck 10 leicht herausgenommen aber auch wieder befestigt werden.

Die in der vorstehenden Beschreibung, in den Ansprüchen sowie in den Zeichnungen offenbarten Merkmale der Erfindung können sowohl einzeln als auch in beliebiger Kombination für die Verwirklichung der Erfindung in ihren verschiedenen Ausführungsformen wesentlich sein.

### Bezugszeichenliste

- 10: Fahrzeugverdeck
- 12: Verdeckgestell
- 14: Hauptschwenklager
- 14a: Unterteil
- 14b: Oberteil
- 16: Karosseriestruktur
- 18: Zentrierbolzen
- 20: Zentrierbohrung
- 22: Schnellverschlußeinrichtung
- 24: Bolzen
- 26: Ansatz
- 28: Griff
- 30: Bohrung

## Patentansprüche

1. Bewegbares Fahrzeugverdeck (10) für ein Cabriolet-Fahrzeug, das ein Verdeckgestell (12) umfaßt und durch Verlagerung desselben um quer zur Fahrzeuglängsachse gegenüberliegende Hauptschwenklager (14) heckseitig ablegbar bzw. von dort in eine Schließstellung rückführbar ist, **dadurch gekennzeichnet, daß** die Hauptschwenklager (14) jeweils aus einem ersten und einem zweiten Hauptschwenklagerteil bestehen, wobei das erste Hauptschwenklagerteil karosseriefest ist und das zweite Hauptschwenklagerteil am Verdeckgestell (12) fest oder befestigt ist und das erste und das zweite Hauptschwenklager über eine Verschlußeinrichtung, vorzugsweise eine Schnellverschlußeinrichtung (22), miteinander lösbar verbindbar sind.

2. Fahrzeugverdeck (10) nach Anspruch 1, **dadurch gekennzeichnet, daß** das erste Hauptschwenklagerteil ein Unterteil (14a) des jeweiligen Hauptschwenklagers (14) ist und das zweite Hauptschwenklagerteil ein Oberteil (14b) des jeweiligen Hauptschwenklagers (14) ist.

3. Fahrzeugverdeck (10) nach Anspruch 1 oder 2, **dadurch gekennzeichnet, daß** jedes Hauptschwenklager (14) eine Zentriereinrichtung zur Zentrierung der jeweiligen ersten und zweiten Hauptschwenklagerteile relativ zueinander aufweist.

4. Fahrzeugverdeck nach einem der vorangehenden Ansprüche, **dadurch gekennzeichnet, daß** es ein Softtop ist.

5. Fahrzeugverdeck nach Anspruch 4, **dadurch gekennzeichnet, daß** es aus Textil, Stoff, PVC oder Leder oder einer beliebigen Kombination derselben besteht.

6. Fahrzeugverdeck nach einem der Ansprüche 1 bis 3, **dadurch gekennzeichnet, daß** es ein RHT ist.

7. Fahrzeugverdeck nach Anspruch 6, **dadurch gekennzeichnet, daß** es aus Glas, Kunststoff oder Metall oder einer beliebigen Kombination derselben besteht.

8. Cabrioletfahrzeug mit einem Faltverdeck (10) nach einem der vorangehenden Ansprüche.
